Europäisches Patentamt

European Patent Office

Office européen des brevets

(11) Veröffentlichungsnummer: **0 179 229 B1**

# (12) EUROPÄISCHE PATENTSCHRIFT

(45) Veröffentlichungstag der Patentschrift: **12.06.91**

(51) Int. Cl.⁵: **G05B 19/10, H04L 13/00**

(21) Anmeldenummer: **85110771.4**

(22) Anmeldetag: **27.08.85**

(54) **Schaltungsanordnung zum Einstellen eines für die Ausführung einer Mehrzahl von unterschiedlichen Betriebsarten ausgelegten Gerätes, insbesondere eines Datenübertragungsgerätes.**

(30) Priorität: **19.09.84 DE 3434399**

(43) Veröffentlichungstag der Anmeldung:
**30.04.86 Patentblatt 86/18**

(45) Bekanntmachung des Hinweises auf die
Patenterteilung:
**12.06.91 Patentblatt 91/24**

(84) Benannte Vertragsstaaten:
**AT CH DE LI NL SE**

(56) Entgegenhaltungen:
**DE-A- 2 933 454**
**FR-A- 2 419 343**
**GB-A- 2 013 381**
**US-A- 4 250 401**

(73) Patentinhaber: **Siemens Aktiengesellschaft**
**Wittelsbacherplatz 2**
**W-8000 München 2(DE)**

(72) Erfinder: **Singer, Johannes, Dipl.-Ing.**
**Oberfeldstrasse 12**
**W-8034 Germering(DE)**

## Beschreibung

Die Erfindung betrifft eine Schaltungsanordnung der im Oberbegriff des Patentanspruchs beschriebenen Art.

Eine Schaltung mit diesen Merkmalen ist durch GB-A-2 013 381 bekannt. Es handelt sich hierbei um eine voreinstellbare Anzeigevorrichtung mit einem ersten Schalter, der zwei Schaltstellungen aufweist und in einer dieser Schaltstellungen einen vergleichsweise langsamen Takt zu einem von mehreren Registern durchschaltet, die ihrerseits zur Ansteuerung von Ziffernanzeigeeinheiten dienen. In seiner anderen Schaltstellung bewirkt der Schalter die Fortschaltung einer Auswahleinrichtung zur Auswahl eines der genannten Register. Ein weiterer Schalter dient zum Nullsetzen aller Register und damit zur Herstellung eines eindeutigen Ausgangszustands.

Aufgabe der Erfindung ist es, eine Schaltungsanordnung der gattungsgemäßen Art so auszubilden, daß mit relativ geringem Schaltungsaufwand sowohl eine Auswahl wenigstens einer Betriebsart als auch eine Modifizierung dieser Betriebsart möglich ist.

Die Lösung dieser Aufgabe ergibt sich aus dem Patentanspruch.

Bei der erfindungsgemäßen Schaltungsanordnung werden also für die Auswahl einer Betriebsart sowie für die Modifizierung dieser Betriebsart jeweils dieselben Einstell- bzw. Auswahlelemente benutzt.

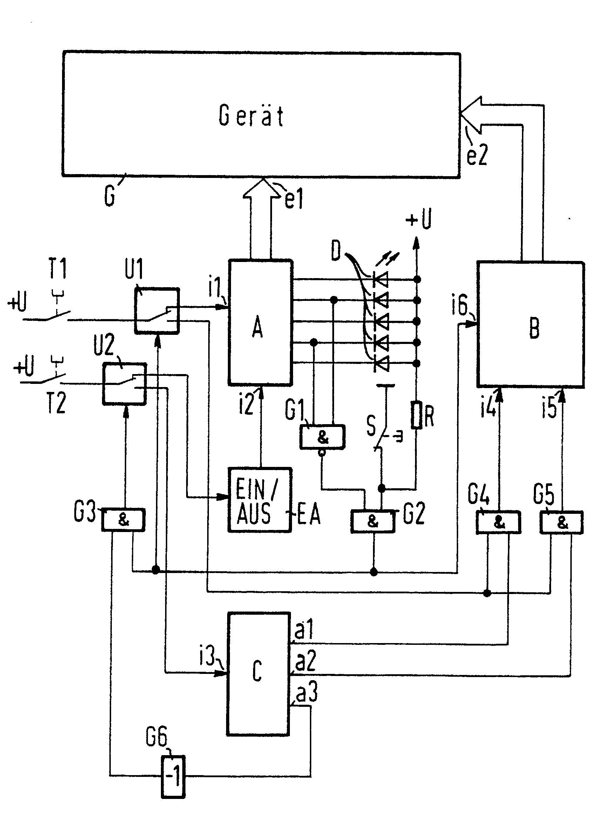

Weitere Vorteile und Merkmale der Erfindung ergeben sich aus der folgenden Beschreibung eines Ausführungsbeispiels anhand der Zeichnung.

Die einzige Zeichnungsfigur zeigt in einem Blockschaltbild ein Gerät G, bei dem es sich beispielsweise um ein Datenübertragungsgerät handelt, das in mehreren Betriebsarten arbeiten kann, die mit Hilfe der dargestellten Schaltung gesondert einstellbar und gegebenenfalls änderbar sind. Die Schaltung besitzt eine Betriebsart-Auswahleinrichtung A, die beispielsweise einen Zähler enthält und die ausgangsseitig mit einem Auswahleingang ei des Geräts G verbunden ist. Die Schaltung besitzt ferner eine Betriebsart-Änderungseinrichtung B, die beispielsweise zwei gesondert einstellbare Zähler enthält und ausgangsseitig mit einem Steuereingang e2 des Gerätes G verbunden ist.

Die Betriebsart-Auswahleinrichtung A ist mit einem Betätigungseingang il mit der einen Ausgangsseite eines Umschalters U1 verbunden. Mit der Eingangsseite des Umschalters U1 ist ein durch einen Taster T1 gebildetes Auswahlelement angeschlossen, welches bei Betätigung eine Spannung von beispielsweise +U an den Umschalter U1 anzulegen vermag.

Die Betriebsarten-Auswahleinrichtung A weist ferner einen Steuereingang i2 auf, der mit der Ausgangsseite eines Einschalt-/Ausschaltelements EA verbunden ist. Je nach Ansteuerung dieses Einschalt-/Ausschaltelements EA wird dem Steuereingang i2 entweder ein Einschaltsignal oder ein Ausschaltsignal zugeführt. Wird dem Steuereingang i2 der Betriebsarten-Auswahleinrichtung A ein Einschaltsignal zugeführt, so hat dies zur Folge, daß die in dem betreffenden Augenblick gerade ausgewählte bzw. eingestellte Betriebsart - durch die Einstellung der betreffenden Betriebsart-Auswahleinrichtung A festgelegt - in dem Gerät G aktiviert bzw. eingeschaltet wird. Wird hingegen dem Steuereingang i2 der Betriebsart-Auswahleinrichtung A ein Ausschaltsignal zugeführt, so ist die jeweils gerade eingestellte Betriebsart nicht wirksam gemacht. Geht man in diesem Zusammenhang einmal davon aus, daß die Betriebsart-Auswahleinrichtung A einen Zähler enthält, so bedeutet dies, daß die Zählerstellung dieses Zählers durch dem Eingang il Zugeführte Impulse veränderbar ist, während dem Steuereingang i2 zugeführteSignale bewirken, daß die jeweils erreichte Zählerstellung entweder unverändert beibehalten oder änderbar ist.

Das Einschalt-/Ausschaltelement EA ist eingangsseitig mit der einen Ausgangsseite eines weiteren Umschalters U2 verbunden, der mit seiner Eingangsseite über ein durch einen weiteren Taster T2 gebildetes Auswahlelement an einem eine Spannung von beispielsweise +U führenden Schaltungspunkt angeschlossen ist. Wenn der Taster T2 betätigt ist, dann gelangt die betreffende Spannung +U, die beispielsweise kennzeichnend sein mag für ein Binärsignal "1", zum Eingang des Einschalt-/ Ausschaltelements hin und bewirkt dessen Umsteuerung.

Die Betriebsart-Auswahleinrichtung A weist eine Reihe von Ausgängen auf, an denen im vorliegenden Fall durch Leuchtdioden D gebildete Anzeigeelemente angeschlossen sind. Die Leuchtdioden D Liegen dabei alle mit ihrer Anode an einem eine Spannung von +U führenden Schaltungspunkt. Die Anordnung ist dabei so getroffen, daß in jeder Einstellposition der Betriebsart-Auswahleinrichtung und damit bei jeder ausgewählten bzw. eingestellten Betriebsart eine Leuchtdiode D blinkt bzw. leuchtet.

Mit zwei Ausgängen der Betriebsart-Auswahleinrichtung A ist im vorliegenden Fall ein NAND-Glied G1 mit seinen Eingängen verbunden. Der Ausgang des betreffenden NAND-Gliedes G1 ist mit dem einen Eingang eines UND-Gliedes G2 verbunden, welches mit seinem anderen Eingang über einen Widerstand R an einem die Spannung +U führenden Schaltungspunkt und über einen Schalter S an Masse liegt. An dieser Stelle sei angemerkt, daß das Massepotential kennzeichnend sei für ein Binärsignal "0". Die die beiden Verknüpfungsglieder G1, G2, den Widerstand R und den Schalter S umfassende Anordnung stellt eine Umsteuereinrichtung dar, deren Bedeutung weiter unten noch ersichtlich werden wird. An dieser Stelle sei angemerkt, daß in dem Fall, daß der Schalter S sich in der gezeichneten Schalterstellung befindet, das UND-Glied G2 stets gesperrt sein wird. In diesem falle gibt das betreffende UND-Glied G2 ausgangsseitig ein Binärsignal "0" ab.Ist der Schalter S hingegen geöffnet, so Liegt über den Widerstand R an dem mit dem Schalter S normalerweise verbundenen Eingang des UND-Gliedes G2 ein einem Binärsignal "1" ensprechendes Potential. Wenn vom Ausgang des NAND-Gliedes G1 dann ein entsprechendes Binärsignal "1" abgegeben wird, gibt auch das UND-Glied G2 ein solches Binärsignal "1" ab.

Der Ausgang des UND-Gliedes G2 ist zum einen mit einem Einstell-/Änderungseingang i6 der Betriebsarten-Änderungseinrichtung B verbunden. Zum anderen ist der Ausgang des UND-Gliedes G2 mit dem Betätigungseingang des bereits erwähnten Umschalters U1 und mit einem Eingang eines weiteren UND-Gliedes G3 verbunden, welches ausgangsseitig mit dem Betätigungseingang des ebenfalls bereits erwähnten Umschalters U2 verbunden ist. Die betreffenden Umschalter U1, U2 befinden sich normalerweise - d.h. dann, wenn ihren Betätigungseingängen jeweils ein Binärsignal "0" zugeführt ist - in den in der Zeichnung gezeichneten Schalterstellungen. Wird dem Betätigungseingang des jeweiligen Umschalters U1, U2 hingegen ein Binärsignal "1" zugeführt, so gelangt der betreffende Umschalter in seine andere, in der Zeichnung gerade nicht dargestellte Schalterstellung.

Der Umschalter U1 ist mit seiner noch nicht betrachteten anderen Ausgangsseite mit den einen Eingängen zweier UND-Glieder G4, G5 verbunden. Diese UND-Glieder G4, G5 sind ausgangsseitig mit Auswahleingängen i4, i5 der Betriebsart-Änderungseinrichtung B verbunden. Die Ansteuerung der betreffenden Eingänge i4, i5 bewirkt, daß jeweils eine der in der Betriebsart-Änderungseinrichtung B enthaltenen Einstelleinrichtungen ausgewählt bzw. wirksam ist.Wie oben bereits angedeutet, kann die betreffende Betriebsart-Änderungseinrichtung B beispielsweise zwei Zähler enthalten; diese können von den Eingängen i4, i5 her jeweils einzeln wirksam steuerbar sein.

Die UND-Glieder G4, G5 sind mit ihren anderen, noch nicht betrachteten Eingängen an Ausgängen a1 bzw a2 einer Auswahlsteuereinrichtung C angeschlossen, die beispielsweise durch einen Zähler gebildet sein kann. Diese Auswahlsteuereinrichtung C ist mit einem Steuereingang i3 an der noch nicht betrachteten Ausgngsseite des Umschalters U2 angeschlossen. Mit einem weiteren Ausgang a3 ist die betreffende Auswahlsteuereinrichtung C über einen Inverter G mit dem noch nicht betrachteten Eingang des oben bereits erwähnten UND-Gliedes G3 verbunden. Die Auswahlsteuereinrichtung C sei so ausgelegt, daß sie in ihrer Ruhe- oder Ausgangsstellung von keinem der gezeigten Ausgänge ein Ausgangssignal, und zwar ein Binärsignal "1", abgibt und daß sie auf ihre Ansteuerung bzw. Betätigung hin jeweils nur von einem ihrer Ausgänge a1, a2, a3 ein Ausgangssignal, im vorliegenden Fall ein Binärsignal "1", abzugeben gestattet Durch Zuführen von Steuerimpulsen bzw. Signalen zu dem Steuereingang i3 kann festgelegt werden, von welchem der betreffenden Ausgänge die Auswahlsteuereinrichtung C ein entsprechendes Ausgangssignal abgibt.

Nachdem zuvor der Aufbau der in der Zeichnung dagestellten Schaltungsanordnung in dem hier interessierenden Umfang erläutert worden ist, sei nunmehr die Arbeitsweise dieser Schaltungsanordnung betrachtet.

Dazu sei zunächst davon ausgegangen, daß sich der Schalter S in seiner in der Zeichnung dargestellten Schalterstellung befindet. Ferner sei dabei davon ausgegangen, daß das Enschalt-/Ausschaltelement EA mit der Betriebsarten-Auswahleinrichtung A so zusammenwirkt, daß lediglich bei Abgabe eines Einschaltsignals "1" von dem betreffenden Einschalt-/Ausschaltelement die Betriebsart-Auswahleinrichtung ausgangsseeig aktiviert ist. Dies bedeutet, daß das Einschalt-/Ausschaltelement EA mit der Betriebsart-Auswahleinrichtung A in der Weise zusammenwirkt, daß lediglich bei Abgabe eines Einschaltsignals von dem Einschalt-/Ausschaltelement EA die dann von der Betriebsart-Auswahleinrichtung jeweils eingenommene Stellung bzw. die dadurch festgelegte Betriebsart in dem Gerät G eingestellt wird. Zunächst möge das Einschalt-/Ausschaltelement EA jedoch ein Ausschaltsignal "0" abgeben.

Wird bei der in der Zeichnung dargestellten Schaltungsanordnung nun der Taster T1 betätigt, so gelangt die Betriebsart-Auswahleinrichtung A in ihre verschiedenen Einstellungen, was durch Blinken bzw. Leuchten der jeweils zugehörigen Leuchtdiode D angezeigt wird. Wird bei einer erreichten Einstellung der Taster T2 betätigt, so bewirkt dies eine Umsteuerung des Einschalt-/Ausschaltelements EA mit der Folge, daß die betreffende Einstellung der Betriebsart-Auswahleinrichtung A nunmehr zur Einstellung des G führt.

Nunmehr sei angenommen, daß der Schalter S geöffnet ist und daß das Einnschalt-/Ausschaltelement EA ein Ausschaltsignal "0" abgibt. Ferner sei davon ausgegangen, daß die Betriebsart-Auswahleinrichtung A von ihrem der jeweils angestellten bzw.ausgewählten Einstellung entsprechenden Ausgang ein Binärsignal "0" abgibt, während ansonsten an den betreffenden Ausgängen jeweils ein Binärsignal "1" auftritt. Demgemäß gibt das NAND-Glied G1 bei zwei Einstellungen der Betriebsart-Auswahleinrichtung ein Binärsignal "1" an den einen Eingang des UND-Gliedes G2 ab. Da auch an den anderen Eingang des betreffenden UND-Gliedes G2 ein Binärsignal "1"liegt, gibt dieses Verknüpfungsglied ausgangsseitig dabei auch ein Binärsignal "1" ab. Dies hat zum einen zur Folge, daß der Umschalter U1 umgesteuert wird. Zum anderen hat dies zur Folge, daß über das nunmehr übertragungsfähige UND-Glied G3 auch der Umschalter U2 umgesteuert wird. Schließlich hat dies zur Folge, daß dem Einstell-/Änderungseingang i6 der Betriebsart-Änderungseinrichtung B ein Freigabesignal zugeführt wird, demzufolge in dieser Betriebsart-Änderungseinrichtung nunmehr auf die gerade eingestellte bzw. ausgewählte Betriebsart sich beziehende Parameter geändert werden können. Diese Änderung erfolgt durch Zuführung von Signalen bzw. Impulsen an den Eingängen i4 bzw. i5. Dazu muß jedoch eines dieser beiden UND-Glieder G4, G5 erst in den übertragungsfähigen Zustand gesteuert werden. Dies geschieht dadurch, daß zunächst der Taster T2 betätigt wird, womit zuerst vom Ausgang a1 und danach bzw. bei erneuter Betätigung vom Ausgang a2 der Auswahlsteuereinrichtung C ein Binärsignal "1" abgegeben wird. Wenn sodann der Taster T1 betätigt wird, gelangt ein Binärsignal "1" über das dann übertragungsfähige UND-Glied G4 oder G5 zu dem Steuereingang i4 oder i5 der Betriebsart-Änderungseinrichtung hin und bewirkt deren Einstellung.

Ist die gewünschte Einstellung der Betriebsart-Änderungseinrichtung B erfolgt, indem beispielsweise der Taster T1 in entsprechender Häufigkeit betätigt worden ist, so kann anschließend der Taster T2 betätigt werden, um die Auswahlsteuereinrichtung C so einzustellen, daß diese von ihrem Ausgang a3 ein Binärsignal "1" abgibt. Dies hat dann zur Folge, daß vom Ausgang des UND-Gliedes G3 wieder ein Binärsignal "0" abgegeben wird, demzufolge der Umschalter U2 wieder in seine Schalterstellung gelangt, wie sie aus der Zeichnung ersichtlich ist. Nunmehr bewirkt die erneute Betätigung des Tasters T2 die Einschaltung des Einschalt-/Ausschaltelements EA, welches daraufhin durch Abgabe eines Einschaltsignals "1" die durch die Betriebsart-Auswahleinrichtung A eingestellte und zuvor geänderte Betriebsart in dem Gerät G einzuschalten gestattet.

Soll die Einstellung der Betriebsart-Auswahleinrichung wieder geändert werden, so ist der Schalter S wieder zu schließen. Dadurch gelangt der Umschalter U1 wieder in seine in der Zeichnung gezeigte Schalterstellung, in der dem Steuereingang i1 der Betriebsart-Auswahleinrichtung A zu deren Einstellung erforderliche Signale bzw. Impulse zuführbar sind.

Abschließend sei noch angemerkt, daß durch die jeweils vorgenommene Parameter-Einstellung/Änderung nicht zulässige Funktionen des Gerätes G automatisch unwirksam gemacht werden können. Bezüglich der Anzeigeelemente bzw. Leuchtdioden D sei bemerkt, daß diese vorzugsweise blinken, solange die jeweils zugehörige und ausgewählte Betriebsart noch nicht eingestellt, d.h. im Gerät noch nicht aktiviert ist.

## Ansprüche

1. Schaltungsanordnung zum Einstellen eines Geräts (G) insbesondere eines Datenübertragungsgeräts, das in mehreren unterschiedlichen Betriebsarten betrieben werden kann,

   mit einer als Betriebsart-Auswahlelement dienenden ersten Taste (T1)

   sowie mit einer als Ein/Ausschalter dienenden zweiten Taste (T2), mittels derer die jeweils ausgewählte Betriebsart aktivierbar ist, **gekennzeichnet durch**

   eine Betriebsart-Auswahleinrichtung (A), die durch wiederholte Betätigung der genannten ersten Taste (T1) in eine von mehreren Schaltstellungen fortschaltbar ist, die den einzelnen Betriebsarten des Geräts (G) entsprechen,

   eine Betriebsart-Änderungseinrichtung (B) zur Modifizierung von einzelnen Parametern der jeweils ausgewählten Betriebsart, die in zumindest einer der schaltstellungen der Betriebsart-Auswahleinrichtung (A) von dieser (über i6) in einen Schaltzustand umschaltbar ist, in dem sie durch die erste Taste (T1) zur Modifizierung der Parameter beeinflußbar ist,

   den Tasten (T1, T2) zugeordnete, in der genannten wenigstens einen Schaltstellung der Betriebsart-Auswahleinrichtung (A) von dieser betätigbare Umschalteinrichtungen (U1, U2) zur Verbindung der zweiten Taste (T2) mit einer Steuereinrichtung (C), die wahlweise einen von mehreren Steuereingängen (i4, i5) der Betriebsart-Änderungseinrichtung (B) freigibt (über G4 bzw. G5), bzw. zur Durchschaltung der ersten Taste (T1) zu dem jeweils freigegebenen Steuereingang (i4 bzw. i5) der Betriebsart-Änderungseinrichtung (B) in der Weise, daß die Betriebsart-Änderungseinrichtung (B) in diesem Betriebszustand von derselben Taste (T1) beeinflußbar ist, mit der auch die Betriebsart-Auswahleinrichtung (A) fortschaltbar ist.

## Claims

1. Circuit arrangement for setting a device (G), particularly of a data transmission device, which can be operated in several different operating modes,

comprising a first key (T1) used as operating-mode selection element and comprising a second key (T2), used as on/off switch by means of which the operating mode selected in each case can be activated,

characterised by an operating-mode selection device (A) which can be stepped on , by repeated operation of the said first key (T1), into one of several switch positions which correspond to the individual operating modes of the device (G), an operating -mode change device (B) for modifying individual parameters of the operating mode selected in each case which, in at least one of the switch positions of the operating-mode selection device (A) can be switched over by the latter (via i6) into a switched state in which it can be influenced for modification of the parameters by means of the first key (T1), switch-over devices (U1, U2), which are associated with the keys (T1, T2) and, in the said at least one switch position of the operating-mode selection device (A) can be operated by the latter, for connecting the second key (T2) to a control device (C) which optionally enables one of several control inputs (i4, i5) of the operating-mode change device (B) (via G4 and, respectively, G5), or for switching the first key (T1) through to the control input (i4 or, respectively, i5) enabled in each case, of the operating-mode change device (B), in such a manner that the operating-mode change device (B) can be influenced in this operating mode by the same key (T1) by means of which the operating-mode selection device (A) can also be stepped on.

## Revendications

1. Montage pour régler un appareil (G), notamment un appareil de transmission de données, qui peut fonctionner selon plusieurs types de fonctionnement différents,

comportant une première touche (T1) utilisée en tant qu'élément de sélection du type de fonctionnement,

ainsi qu'une seconde touche (T2) utilisée en tant qu'un interrupteur marche/arrêt et à l'aide de laquelle le type de fonctionnement sélectionné peut être activé,

caractérisé par

un dispositif (A) de sélection du type de fonctionnement, que l'on peut faire avancer, au moyen d'un actionnement répété de ladite première touche (T1), dans l'une de plusieurs positions de commutation qui correspondent aux différents types de fonctionnement de l'appareil (G),

un dispositif (B) de modification du type de fonctionnement permettant de modifier des paramètres individuels du type de fonctionnement respectivement sélectionné, qui, lorsque le dispositif (A) de sélection du type de fonctionnement est situé dans au moins l'une des positions de commutation, peut être commuté par ce dispositif de sélection (par l'intermédiaire de i6) dans un état de commutation, dans lequel il peut être influencé par la première touche (T1) permettant de modifier les paramètres, des dispositifs de commutation (U1,U2), qui sont associés aux touches (T1,T2) et peuvent être actionnés par le dispositif (A) de sélection du type de fonctionnement, au moins dans ladite position de commutation, pour raccorder la seconde touche (T2) à un dispositif de commande (C) qui, au choix, libère l'une de plusieurs entrées de commande (i4,i5) du dispositif (B) de modification du type de fonctionnement (par l'intermédiaire de G4 ou G5) ou pour interconnecter la première touche (T1) à l'entrée de commande (i4 ou i5), respectivement libérée, du dispositif (B) de modification du type de fonctionnement de manière que le dispositif (B) de modification du type de fonctionnement peut être influencé, dans cet état de fonctionnement, par la même touche (T1), que celle permettant de faire également avancer le dispositif (A) de sélection du type de fonctionnement.